# EUROPEAN PATENT APPLICATION

(11) **EP 2 950 269 A1**
(43) Date of publication of application: **02.12.2015**
(21) Application number: 14305784.2
(22) Date of filing: 27.05.2014
(51) Int. Cl.: G06T 7/00, G06T 7/20

(54) **Method and apparatus for improving estimation of disparity in a stereo image pair using a hybrid recursive matching processing**

(71) Applicant: Thomson Licensing, 92130 Issy-les-Moulineaux (FR)
(72) Inventor: Gandolph, Dirk, 30952 Ronnenberg (DE)
(74) Representative: Hartnack, Wolfgang

(57) **Abstract**

The estimation of disparity in a stereo image pair using a hybrid recursive matching processing denoted HRM with two different meander scan paths is improved. During the second meander path processing an additional disparity value calculated in the first meander path processing is used for the improved prediction of the disparity values. In a further embodiment, a third meander path processing is carried out, which third meander path corresponds to the first meander path, and the disparity values from the first meander path are used for a further improved prediction of the resulting disparity values. Instead of the third meander path processing, a bilinear filtering of disparity values can follow the second meander path processing.

## Description

### Technical field

The invention relates to improving estimation of disparity in a stereo image pair using a hybrid recursive matching processing with meander scan for disparity vector prediction.

### Background

The usage of recursive processing methods in image processing can be classified into two different types, frame recursive or pixel recursive processing. The frame recursive processing is less adaptive because the iterative calculations for a new pixel value are based upon the frozen set of the previous image results and do not incorporate any interim outcomes generated in the neighbour pixel positions. However, it allows using massively parallel operating hardware like a GPU. Pixel recursive processing is significantly more adaptive because all neighbour pixel results are incorporated as soon as they are created. In pixel recursive algorithms the image is scanned pixel-wise and an iteration is defined by moving forward through the image by directly using previously generated modifications. Thus parallel processing on a GPU cannot be utilised for pixel recursive approaches.

In the field of disparity estimation the Heinrich Hertz Institute developed a hybrid recursive matching processing (HRM) applied for depth estimation in video conference digital stereo camera systems using wide baselines, cf. N. Atzpadin, P. Kauff, O. Schreer, "Stereo Analysis by Hybrid Recursive Matching for Real-Time Immersive Video Conferenc-ing", IEEE Transactions on Circuits and Systems for Video Technology, vol.14, no.3, pages 321-334, March 2004. This HRM depth (or disparity) estimation uses pixel recursive processing and generates dense vector fields.

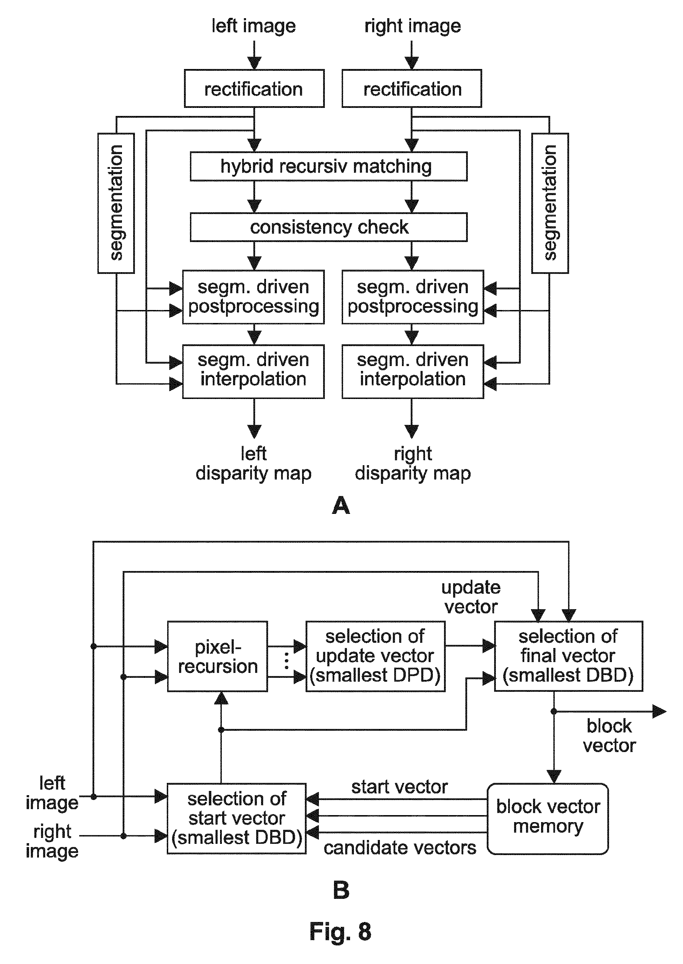

Fig. 8A is taken from this article and shows a disparity estimation processing for left and right images from a stereo camera. The rectification virtually rotates the cameras to generate images with horizontal epipolar lines. The following hybrid recursive matching HRM stage is used for stereo matching. To produce accurate disparities in every area of the image, the sparse disparity maps of the hybrid recursive matching are postprocessed to create a dense map of highly reliable disparities. A consistency check detects mismatches, and then mismatches are substituted by disparities calculated from the surrounding. Around a detected depth discontinuity, missing disparities are extrapolated toward the boundaries of segmentation masks determined in parallel. If no segmentation information is available, the colour information of the original images is used to guide the interpolation or extrapolation of disparities. Outputs are left and right disparity maps.

Fig. 8B is taken from this article and shows the HRM processing in more detail. HRM combines the advantages of block recursive disparity matching and pixel recursive optical flow estimation. The block recursive part (comprising all blocks/stages except the pixel recursion block and the stage of update vector selection) assumes that depth does not change significantly from one image to the next and that depth is nearly the same in the local neighbourhood. But this assumption is not true in image areas containing high motion and at depth discontinuities. To update the results of the block recursive stage in these areas, the pixel recursive stage (comprising the pixel recursion block and the stage of update vector selection) calculates the optical flow by analysing gradients and luminance value differences. The processing includes three consecutive processing steps:
a) Candidate disparity vectors taken from a block vector memory are evaluated for the current block position using recursive block matching, whereby in that block matching the sum of absolute difference values SAD is calculated.
b) The candidate vector with the best result (i.e. the smallest displaced block difference DBD represented by the smallest SAD value) is chosen as the start disparity vector for the pixel recursive processing, which yields an update disparity vector: the vector having the smallest displaced pixel difference DPD. This update vector is calculated on the basis of spatial gradients and gradients between the stereo images, wherein the gradient between the frames is approximated by the DPD given by corresponding points in the left and right images, as shown in equations (3) to (5) in the N. Atzpadin et al. article. Thereafter multiple pixel recursive processes are started at every first pixel position of the odd lines in a block around the considered pixel. The result is one incremental update vector per pixel, which is added to the initial vector to obtain the local update vector. The local update vector of the previous pixel is then taken as the initial vector for the next pixel. The very first position of every pixel recursive processing path is initialised with the start vector from the block recursive stage. After processing all paths of multiple pixel re-cursions, the vector with the smallest DPD among all pixel recursive processes is taken as the final update vector. Its DBD is calculated and compared to the DBD of the start vector from the block recursion.
c) The final disparity vector per pixel is obtained by testing if the update vector from the pixel recursive stage is smaller than the start vector from the block recursive stage. If true, the update vector is chosen as the final output vector, otherwise the start vector is retained. The final disparity vector chosen is stored in the block vector memory.

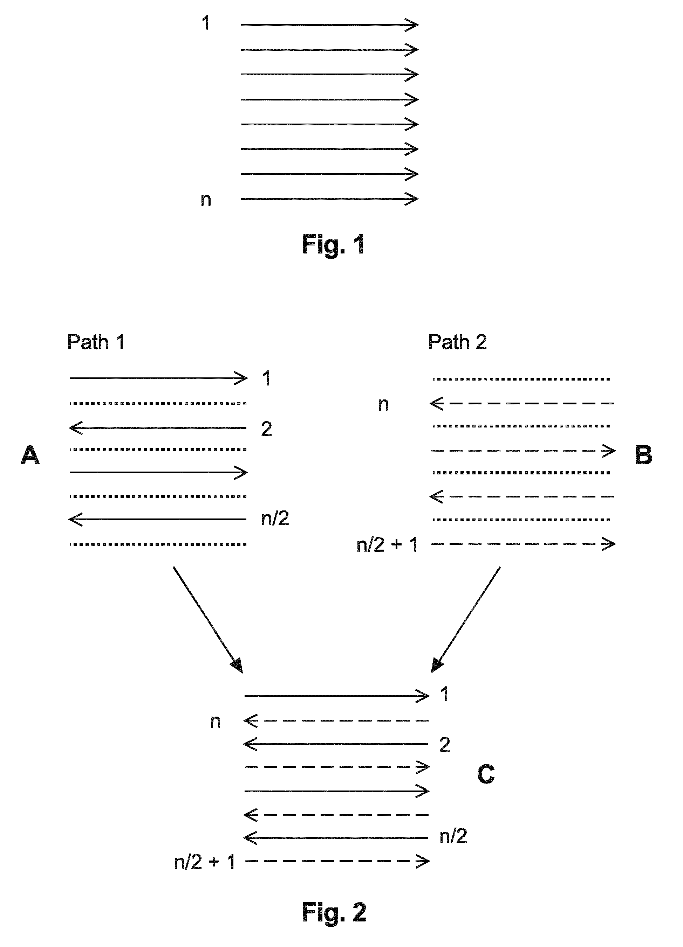

The principle of the meander scan as described in the N. Atzpadin et al. article is depicted in Fig. 2. In this application it is called 'two-path meander scan' in order to differentiate it from the inventive processing. The two-path meander scan across the image is separated into two different paths. The first path in Fig. 2A is running along the lines vertically from top to bottom (or bottom to top) in alternate line direction and the second path in Fig. 2B is running in the opposite vertical direction along the lines, in alternate line direction, wherein each of the two paths is skipping every second image line, thus generating an interleaving pattern. The combination of both paths shown in Fig. 2C covers all lines belonging to the image.
The start of the meander paths changes its order from image to image between top and bottom of the image.
The HRM algorithm is able to cope with arbitrarily shaped video objects and the interleaved meander can be adapted to the binary shape of the video object.

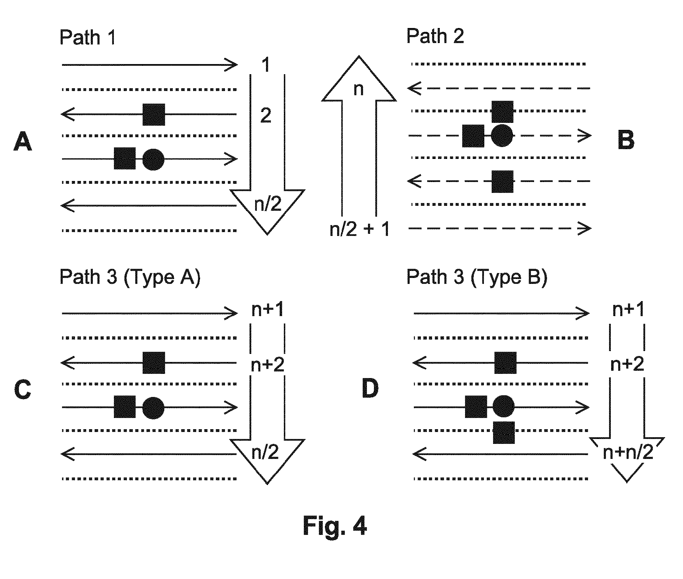

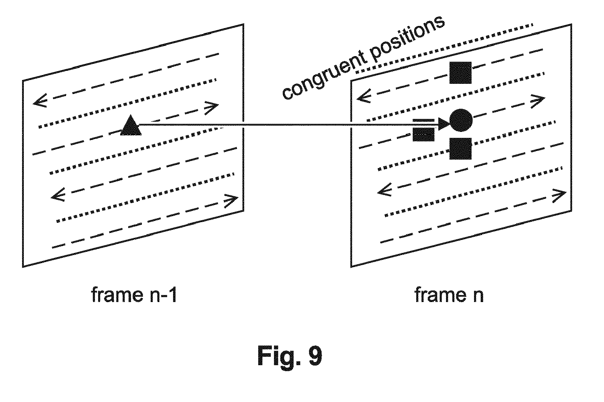

The block recursion uses information of both the previous image and the spatial neighbourhood. This kind of recursion forces temporal and spatial consistency and reduces the local search range to a few pixels. Three matching scores are calculated by using three candidates, which are defined by disparities from the previous and the current image. The following spatial and temporal candidates are tested for this purpose:
- a horizontal predecessor, taken from the left or right position in the actual frame n (depicted in Fig. 4A);
- a vertical predecessor, taken from the bottom or top position in the actual frame n (depicted in Fig. 4A);
- a temporal predecessor shown in Fig. 9, taken from the congruent position in the previous frame n-1.

The HRM generates dense vector fields e.g. for virtual views of remote conferees especially when using stereo camera systems with a wide baseline.

### Summary of invention

The meander scans are used for minimising the required processing time, but a disadvantage inherent to them concerns the quality of the resulting disparity map: the homogeneity in the disparity map is often corrupted due to the different sets of candidate values available during the scans, which leads to disparity maps that are corrupted by lacerated object borders. Another negative influence on the results is caused by the usage of block matching for disparity estimation and leads to a so-called 'fattening effect', cf. G. Blanchet, A. Buades, B. Coll, J.M. Morel, B. Rouge, "Fattening free block matching", Journal of Mathematical Imaging and Vision, vol.41, no.1-2, pages 109-121, September 2011. This fattening effect occurs especially at object borders in a scene, and stereo images inherently cause occluding effects in picture areas where scene objects are masking parts of the background. Occluded areas are visible in one view only and are missing in the opposite view of a stereo camera.

A problem to be solved by the invention is to minimise such fattening effect. This problem is solved by the method disclosed in claim 1. An apparatus that utilises this method is disclosed in claim 2.
Advantageous additional embodiments of the invention are disclosed in the respective dependent claims.

The inventive processing uses improved scanning techniques which increase the quality of the results of the disparity estimation by avoiding the fattening effect typically appearing at scene object borders and by closing (i.e. straightening) lacerated object contours.
Advantageously, the below described processing for pixel recursive disparity estimation can be generalised to pixel recursive algorithms used in image processing.
Some embodiments also provide solutions which, with respect to a first embodiment, do not further increase the amount of processing time needed for generating improved disparity maps.
The invention uses additional pixel recursive and frame recursive processing steps aiming at the minimisation of the border fattening in the disparity map and the avoidance of ragged object borders. A third pixel recursive scan path (but on modified data) is introduced, which works on data that were previously modified. This third pixel recursive scan path significantly improves the disparity map quality. This third scan path repeats the first scan but uses two variants of a slightly different prediction value position configuration, and advantageously avoids any additional overhead processing.
Alternatively, and with even less extra computational effort, a vertical interpolation of a subset of the disparities can be carried out in connection with the second one of the HRM scans.

In principle, the inventive method is suited for improving estimation of disparity in a stereo image pair using a hybrid recursive matching processing denoted HRM, in which HRM the position of pixel blocks of image content in a first image of said image pair is searched in the second image of said image pair, using candidate prediction vectors for each pixel block, wherein a corresponding block disparity vector resulting from said search is refined using pixel recursion for a corresponding pixel pair of said first and second images, which pixel recursion is followed by a block based disparity vector confirmation or correction, and wherein from the resulting disparity vectors for said image pair a disparity map is formed, said method including the steps:
- carrying out said search for successive target positions of a central pixel of said pixel block along a first meander path, which first meander path initially starts at the top of the image and is represented by odd image lines being scanned alternatingly from left to right and from right to left, wherein said candidate prediction vectors for a disparity value for said central pixel of said pixel block are disparity values of the current image horizontal and odd-line vertical predecessor pixel positions and the previous image temporal predecessor pixel position of said central pixel of said pixel block;
- carrying out said search for successive target positions of a central pixel of said pixel block along a second meander path, which second meander path initially starts at the bottom of the image and is represented by even image lines being scanned alternatingly from left to right and from right to left, wherein said candidate prediction vectors for a disparity value for said central pixel of said pixel block are disparity values of the current image horizontal and even-line vertical predecessor pixel positions and the previous image temporal predecessor pixel position of said central pixel of said pixel block,
and wherein the start of said meander paths changes its order from image to image between top and bottom of the image and the scan direction of each line is reversed,
and wherein during said second meander path processing in
addition the current-image first meander path disparity value at the odd-line vertical successor pixel position of said central pixel of said pixel block is used for the prediction of the disparity value for said central pixel of said pixel block.

In principle the inventive apparatus is suited for improving estimation of disparity in a stereo image pair using a hybrid recursive matching processing denoted HRM, in which HRM the position of pixel blocks of image content in a first image of said image pair is searched in the second image of said image pair, using candidate prediction vectors for each pixel block, wherein a corresponding block disparity vector resulting from said search is refined using pixel recursion for a corresponding pixel pair of said first and second images, which pixel recursion is followed by a block based disparity vector confirmation or correction, and wherein from the resulting disparity vectors for said image pair a disparity map is formed, said apparatus including:
- a memory which stores initial disparity values used for said candidate prediction vectors for each pixel block;
- means adapted for:
   carrying out said search for successive target positions of a central pixel of said pixel block along a first meander path, which first meander path initially starts at the top of the image and is represented by odd image lines being scanned alternatingly from left to right and from right to left, wherein said candidate prediction vectors for a disparity value for said central pixel of said pixel block are disparity values of the current image horizontal and odd-line vertical predecessor pixel positions and the previous image temporal predecessor pixel position of said central pixel of said pixel block;
   carrying out said search for successive target positions of a central pixel of said pixel block along a second meander path, which second meander path initially starts at the bottom of the image and is represented by even image lines being scanned alternatingly from left to right and from right to left, wherein said candidate prediction vectors for a disparity value for said central pixel of said pixel block are disparity values of the current image horizontal and even-line vertical predecessor pixel positions and the previous image temporal predecessor pixel position of said central pixel of said pixel block,
and wherein the start of said first and second meander paths changes its order from image to image between top and bottom of the image and the scan direction of each line is reversed,
and wherein during said second meander path processing in addition the current-image first meander path disparity value at the odd-line vertical successor pixel position of said central pixel of said pixel block is used for the prediction of the disparity value for said central pixel of said pixel block.

### Brief description of drawings

Exemplary embodiments of the invention are described with reference to the accompanying drawings, which show in:
- Fig. 1: line-by-line scan;
- Fig. 2: two-path meander scan;
- Fig. 3: three-path meander scan;
- Fig. 4: meander scans showing candidate prediction value pixel positions, where Fig. 4A depicts a known processing;
- Fig. 5: depth map for line-by-line scan and for two-path meander scan;
- Fig. 6: depth map for two-path meander scan, three-path meander scan Type A and three-path meander scan Type B;
- Fig. 7: two-path meander scan with interpolation;
- Fig. 8: disparity estimation processing and HRM processing described in the N. Atzpadin et al. article;
- Fig. 9: congruent pixel positions in two adjacent frames.

### Description of embodiments

Even if not explicitly described, the following embodiments may be employed in any combination or sub-combination.

According to the invention, the hybrid recursive matching algorithm HRM described in the above-mentioned N. Atzpadin et al. article and mentioned above for generating disparity maps in stereo and multi-view camera systems is improved by using a better prediction and/or a special meander scan technique leading to better estimation convergence, thereby avoiding a significant increase in processing time.
For simplicity, the temporal prediction described in the N. Atzpadin et al. article and depicted in Fig. 9 is omitted here. In the inventive processing that temporal prediction remains unchanged.

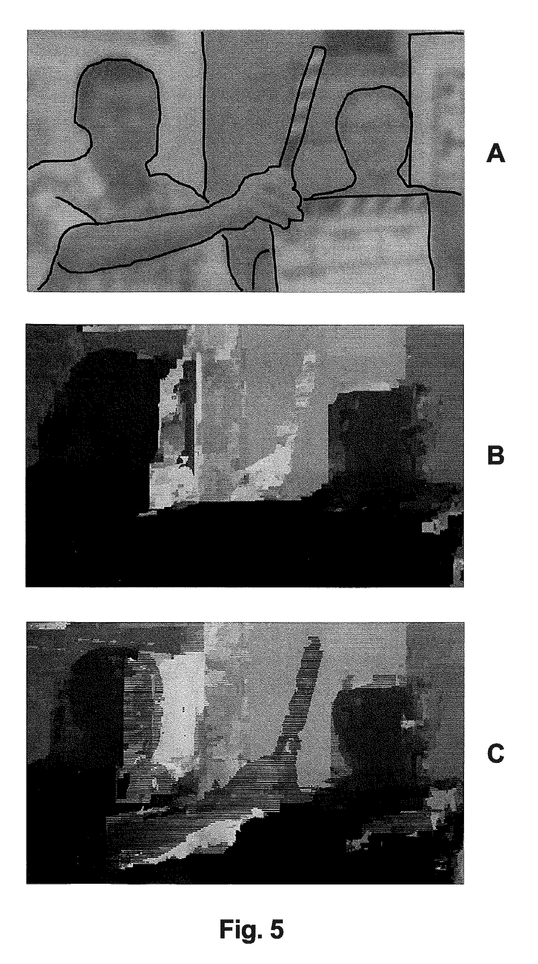

Fig. 1 depicts a simple line-by-line scan, which when applied will also generate disparity maps but with a much lower quality. An example result of a line-by-line scanning processing of a schematic original image shown in Fig. 5A is depicted in Fig. 5B and shows a blocky and quite coarse result. Fig. 5A depicts the schematic of one of the original stereo images the disparity estimation is applied on. It shows two persons close to the camera, one of them holding a movie flap. Positioned left and right behind the persons are two different planes while the background wall is visible in the image centre.

Each pixel iteration utilises input data being used as a prediction for the new estimate. The location and number of the prediction values is chosen dependent from the particular scan path.

In a first embodiment of the invention, scan Path 1 shown in Fig. 4A, the related two spatial pixel positions in frame n (depicted by squares) for prediction disparity values taken for the disparity value at the target pixel position (depicted by a circle), together with the prediction disparity value at the corresponding target pixel position in the previous frame n-1 (marked with a triangle in Fig. 9) are used like in the N. Atzpadin et al. article.
However, during scan Path 2 shown in Fig. 4B one additional prediction disparity value for a successor pixel position vertically adjacent and lying on a line of Path 1 is used for the calculation of a new disparity value at the target pixel position. While two of the prediction disparity values in Path 2 again are located at positions on the second path, the additional one has already been generated during the pixel recursion within the first path. Therefore it is only available for the second path.
The advantageous effect for the two-path scan with improved second scan path processing is shown in Fig. 5C, where the distinguishable object of the left person's arm and the flap in his hand becomes visible. Both were hidden when using the line-by-line of Fig. 1.
For all embodiments it is advantageous to start the first scan path at the top of the image because there is in most cases background image content.

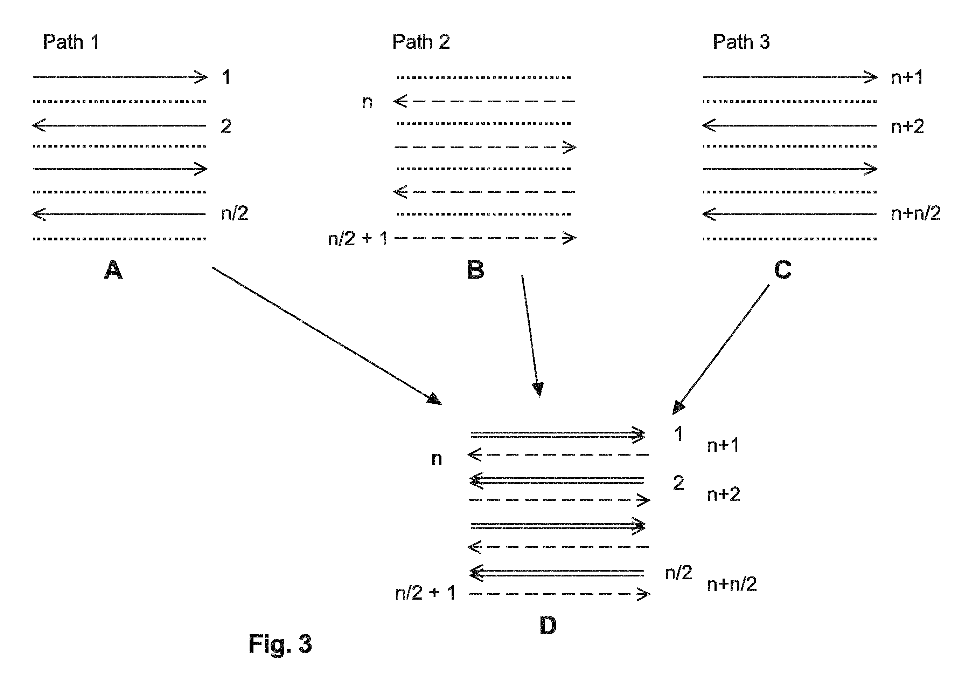

In a second embodiment of the invention, a third scan path and processing as depicted in Fig. 3C, Fig. 3D and Fig. 4C is used. While the scan of Path 1 and Path 2 and the number and positions of the prediction disparity values are kept as described in the first embodiment, the third scan (Path 3A) repeats the scan of Path 1 but the data generated during Path 1 are used for an updated temporal and spatial prediction. This third scan path increases the required processing power by about 50% but on the other hand removes a lot of remaining ambiguities and leaks in the disparity map.

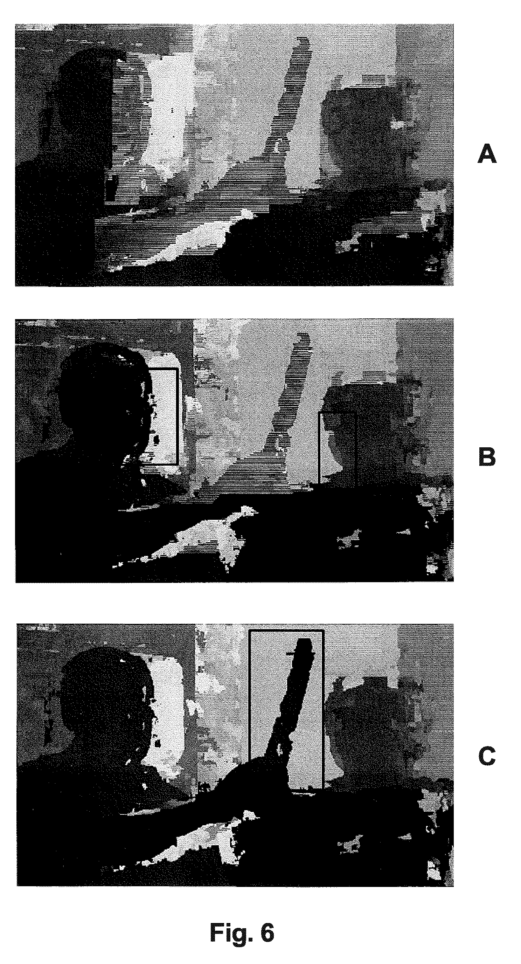

In a third embodiment of the invention, the three scans and the positions of the prediction disparity values are used like in the second embodiment, but an additional vertically adjacent position of a prediction disparity value lying on a line of the Path 2 as depicted in Fig. 4D is used for the Path 3B scan. Both versions improve the disparity maps as depicted in Fig. 6B for the Path 3A processing and Fig. 6C for the Path 3B processing. Both Fig. 6B and Fig. 6C show improvements in the marked areas by closing the object contours and removing the fraying object borders in Fig. 5C, but the results of the Path 3B processing shown in Fig. 6C are better.
The reason of distinguishing between Path 3A processing and Path 3B processing lies in the possibility to save, by using Type A prediction, additional processing time needed for the 3rd path scan. The Path 3A processing is independent from Path 2 locations and thus can be carried out simultaneously (i.e. already in parallel) with the Path 2 processing, which means that advantageously the Path 3A processing does not increase the required overall amount of processing time.

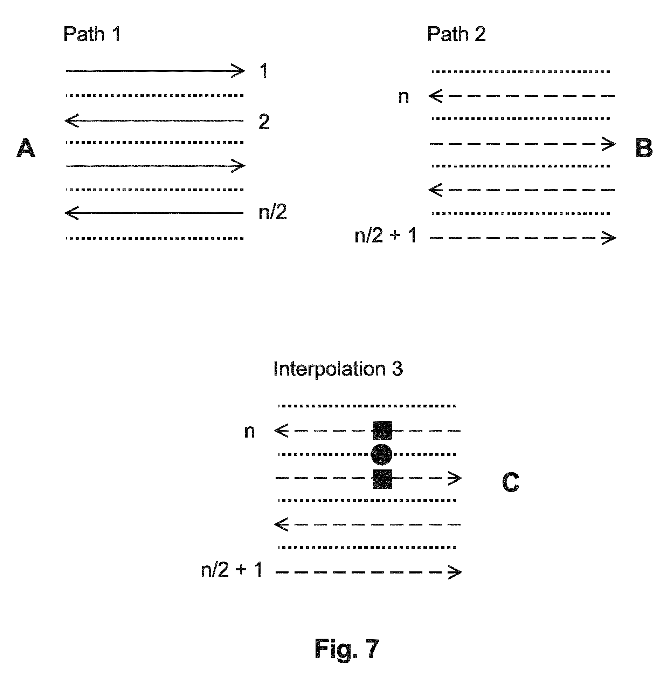

The fourth embodiment of the invention is derived from the first embodiment. Instead of carrying out a third scan path repeating the first scan path like in the second and third embodiments, a bilinear vertical filtering as shown in Fig. 7 is performed. For each target pixel position (marked with a circle) an interpolation is performed from the prediction disparity values of two vertically adjacent pixel positions (marked with a square) lying on the second scan path lines. This filtering can be carried out with a small delay following the second scan path processing, e.g. following the processing of a line in the second meander path.

As can be observed within Fig. 6A, the object shapes in the disparity map resulting from scan Path 2 of the two-path meander scan are already close to the object shapes generated by Path 3 in the three-path meander scan. In fact the disparity map resulting from Path 2 in the two-path meander scan is the same as an intermediate disparity map created from Path 2 in a three-path meander scan.
However, there is a difference between the processing types defined by the steps in Path 1 and Path 2, and the additional step of Interpolation 3. While the Path 1 and Path 2 processings are pixel recursive and thus cannot be calculated in parallel on a GPU, Interpolation 3 is a frame recursive processing allowing parallel processing on a GPU. This is advantageous as it saves processing time while still providing a quality gain in the generated disparity maps.

The invention improves the quality of pixel recursive processing in particular for depth map estimation and improves vertical continuity of disparity fields. The border fattening effect is minimised and the ragging of the depth maps at object borders is avoided. The additional processing time needed for the improvements is minimised while providing a high potential of quality enhancements in disparity maps. The invention can be used for generating improved dispari-ty/depth maps e.g. in static stereo picture processing or when taking with a smartphone a set of pictures around an object. More general, the invention can be applied to pixel recursive processing types used in image processing.

The inventive processing can be carried out by a single processor or electronic circuit, or by several processors or electronic circuits operating in parallel and/or operating on different parts of the inventive processing.

## Claims

1. Method for improving estimation of disparity in a stereo image pair using a hybrid recursive matching processing denoted HRM, in which HRM the position of pixel blocks of image content in a first image of said image pair is searched in the second image of said image pair, using candidate prediction vectors for each pixel block, wherein a corresponding block disparity vector resulting from said search is refined using pixel recursion for a corresponding pixel pair of said first and second images, which pixel recursion is followed by a block based disparity vector confirmation or correction, and wherein from the resulting disparity vectors for said image pair a disparity map is formed, said method including the steps:
- carrying out said search for successive target positions of a central pixel of said pixel block along a first meander path, which first meander path initially starts at the top of the image and is represented by odd image lines being scanned alternatingly from left to right and from right to left, wherein said candidate prediction vectors for a disparity value for said central pixel of said pixel block are disparity values of the current image horizontal and odd-line vertical predecessor pixel positions and the previous image temporal predecessor pixel position of said central pixel of said pixel block;
- carrying out said search for successive target positions of a central pixel of said pixel block along a second meander path, which second meander path initially starts at the bottom of the image and is represented by even image lines being scanned alternatingly from left to right and from right to left, wherein said candidate prediction vectors for a disparity value for said central pixel of said pixel block are disparity values of the current image horizontal and even-line vertical predecessor pixel positions and the previous image temporal predecessor pixel position of said central pixel of said pixel block, and wherein the start of said meander paths changes its order from image to image between top and bottom of the image and the scan direction of each line is reversed,
**characterized in that** during said second meander path processing in addition the current-image first meander path disparity value at the odd-line vertical successor pixel position of said central pixel of said pixel block is used for the prediction of the disparity value for said central pixel of said pixel block.

2. Apparatus for improving estimation of disparity in a stereo image pair using a hybrid recursive matching processing denoted HRM, in which HRM the position of pixel blocks of image content in a first image of said image pair is searched in the second image of said image pair, using candidate prediction vectors for each pixel block, wherein a corresponding block disparity vector resulting from said search is refined using pixel recursion for a corresponding pixel pair of said first and second images, which pixel recursion is followed by a block based disparity vector confirmation or correction, and wherein from the resulting disparity vectors for said image pair a disparity map is formed, said apparatus including:
- a memory which stores initial disparity values used for said candidate prediction vectors for each pixel block;
- means adapted for:
carrying out said search for successive target positions of a central pixel of said pixel block along a first meander path, which first meander path initially starts at the top of the image and is represented by odd image lines being scanned alternatingly from left to right and from right to left, wherein said candidate prediction vectors for a disparity value for said central pixel of said pixel block are disparity values of the current image horizontal and odd-line vertical predecessor pixel positions and the previous image temporal predecessor pixel position of said central pixel of said pixel block; carrying out said search for successive target positions of a central pixel of said pixel block along a second meander path, which second meander path initially starts at the bottom of the image and is represented by even image lines being scanned alternatingly from left to right and from right to left, wherein said candidate prediction vectors for a disparity value for said central pixel of said pixel block are disparity values of the current image horizontal and even-line vertical predecessor pixel positions and the previous image temporal predecessor pixel position of said central pixel of said pixel block, and wherein the start of said of said first and second meander paths changes its order from image to image between top and bottom of the image and the scan direction of each line is reversed,
**characterized in that** during said second meander path processing in addition the current-image first meander path disparity value for the odd-line vertical successor pixel position of said central pixel of said pixel block is used for an improved prediction of the disparity value for said central pixel of said pixel block.

3. Method according to claim 1, or apparatus according to claim 2, further including:
carrying out said search for successive target positions of a central pixel of said pixel block along a third meander path, which third meander path corresponds to said first meander path, wherein said candidate prediction vectors for a disparity value for said central pixel of said pixel block have the same positions as in said first meander path but their values are taken from the disparity values determined during said first meander path processing and are used for a further improved prediction of the disparity value for said central pixel of said pixel block.

4. Method according to the method of claim 3, or apparatus according to the apparatus of claim 3, wherein that third meander path processing is carried out together with said second meander path processing.

5. Method according to the method of claim 3 or 4, or apparatus according to the apparatus of claim 3 or 4, further including:
- during said third meander path processing, using in addition the first meander path disparity value for the odd-line vertical successor pixel position of said central pixel of said pixel block for a further improved prediction of the disparity value for said central pixel of said pixel block.

6. Method according to claim 1, or apparatus according to claim 2, further including:
- following the processing of a line in said second meander path, carrying out for said central pixel of said pixel block a further improved prediction of the disparity value by bilinear filtering of the disparity values for the even-line vertically adjacent pixel positions of said central pixel of said pixel block.

7. Computer program product comprising instructions which, when carried out on a computer, perform the method according to one of claims 1 and 3 to 6.
